# EUROPEAN PATENT SPECIFICATION

(11) **EP 0 359 563 B1**
(45) Date of publication and mention of the grant of the patent: **02.02.1994**
(21) Application number: 89309335.1
(22) Date of filing: 14.09.1989
(51) Int. Cl.: C03C 17/00, C03C 17/04, B05B 5/12, B01F 5/02, B01F 13/10

(54) **Method and apparatus for generating a fine dispersion of particles in a gas**
Verfahren und Vorrichtung zur Herstellung einer feinen Partikeldispersion in Gas
Méthode et appareillage pour obtenir une fine dispersion de particules dans un gaz

(30) Priority: 16.09.1988 GB 8821771; 16.09.1988 GB 8821800
(43) Date of publication of application: 21.03.1990
(73) Proprietor: GLASS BULBS LIMITED, Doncaster South Yorkshire DN11 8NF (GB)
(72) Inventor: Cox, William Alfred Lawrence, Everton Doncaster South Yorkshire (GB); Rose, Michael John, Bessacarr Doncaster South Yorkshire (GB)
(74) Representative: Fleming, Ian Alexander, Dr.

(56) References cited:
- GB-A- 1 421 517
- GB-A- 2 130 906
- PATENT ABSTRACTS OF JAPAN vol. 13, no. 107 (C-576)(3455) 14 March 1989, & JP-A-63 283728 (CHUO KAKOKI K.K.) 21 November 1988,

## Description

The present invention relates to a method of and an apparatus for generating a fine dispersion of particles in a gas, the apparatus commonly being termed 'a smoke generator'. In particlar, the present invention relates to a method of generating a fine dispersion of glass powder to be electrostatically deposited on the internal surface of a glass envelope for a lamp. The method and apparatus of the present invention are particularly suited for use with the method and apparatus for producing a light diffusing coating in a glass envelope as disclosed and claimed in our two copending European Patent Applications claiming priority respectively from GB Patent Application Nos. 8821771.6 and 8821800.3 and from GB Patent Application Nos. 8821777.3 and 8821800.3.

GB 1395437 (Philips) discloses an apparatus for electrostatically depositing powder on the inside surface of the envelope of a lamp in which the powder to be deposited is mixed with a transport gas stream. In one embodiment, a container holding powder includes a mechanical stirrer positoned within the bulk of the powder by means of which a cloud of powder can be formed above the powder level.

Proposals to use a fluidised bed to create a fine suspension of dust powder and to turn that suspension into an aerosol are not new. GB 2130906A (NRDC) discloses an apparatus for dispensing dust suspensions to simulate industrial fume emissions such as occur in the iron and steelmaking industry. The apparatus includes a cylindrical vessel which is spanned by a perforated baffle. A bed of particles including deagglomerated dust particles and nickel spheres is formed upon the baffle. Dry and filtered air enters the vessel from below the baffle and passes through the baffle and bed of particles. This passage of air through the bed forms a rising suspension in air of fine particles elutriated (ie separated from the heavier particles) from the bed.

GB 1421517 (Interliz) discloses an apparatus for "whirling-up" a powdery or granular material, such as magnesium oxide, in a vessel and for blowing it out of this vessel. One nozzle mounted in the upper end of the vessel is directed downwardly and substantially in the circumferential direction of the vessel. A further nozzle at the lower end is directed tangentially. Passage of air through the lower nozzle and into the powdery material causes the material to be loosened up, particularly at the surface, in the course of which a cloud of powder forms above the surface. This cloud is 'whirled-up' by air from the upper nozzle. Hot air at about 100°C may be used to effect at least a partial drying of the material during the process, which is particularly beneficial for the hydroscopic magnesium oxide.

It is an object of the present invention to provide an improved method of and apparatus for generating a fine dispersion of particles in a gas.

According to a first aspect of the present invention there is provided a method of generating a fine dispersion of particles in a gas comprising the steps of:
maintaining a body containing the gas and the particles at an elevated temperature; and directing a plurality of jets of the gas through the particles, so that the jets are directed to converge at one or more points in the body containing the particles.

The inventors surprisingly found that when the temperature of their apparatus for generating a fine dispersion of particles was increased from room temperature to 220°C, there was an approximately ten-fold increase in the mass of particles taken into suspension by a given mass of gas. This increase was much greater than could be explained by considering the thermal expansion of a constant mass of gas with increase in temperature. A similar increase of approximately tenfold was found in a subsequent test when the temperature of the apparatus was increased from room temperature to 100°C. The maximum temperature which could be used would be dependent on the properties of the powder to be put into suspension.

The powder used was a zinc borosilicate glass composition containing by weight 22% silicon dioxide (SiO₂), 31% boron oxide (B₂O₃), 27% zinc oxide (ZnO), 4% sodium oxide (Na₂O), 7% sodium fluoride (NaF), 5% potassium oxide (K₂O), 2% molybdenum oxide (MoO₃) and 2% tungsten oxide (WO₃) with the addition of 0.3% by weight of the free-flow aid Degussa D17. The powder was very finely divided with an average particle size of from 3µm to 4µm and a maximum particle size of 12µm.

In the present invention, the plurality of jets are directed to converge at one or more points in the body containing the particles. This increases the efficiency of the method because of the turbulence produced in the bulk powder by the convergence of jets and also because it reduces the risk of a jet of gas blowing straight through the bulk powder.

According to a second aspect of the present invention there is provided an apparatus for generating a fine dispersion of particles in a gas, the apparatus comprising:
a body for containing the gas, the body having an inlet and an outlet for passage of the particles;
means for directing a plurality of jets of gas through the body;
and means for maintaining the body at an elevated temperature.

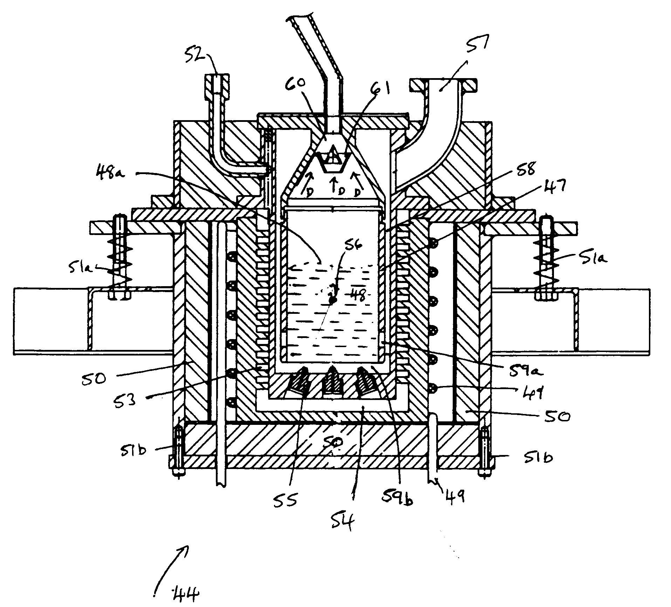

An embodiment of the present invention will now be described, by way of example only, and with reference to the accompanying Figure which shows a sectional view through the embodiment.

A smoke generator assembly 44 has a main body 47 for containing glass powder 48 and gas. A metal clad heating element 49 surrounds the body 47, maintaining the body 47 and its contents at an elevated temperature the whole being surrounded by heat insulation 50. Springs 51a, 51b are provided to enable the assembly to be vibrated during operation.

Pressurized air is fed into the smoke generator via an inlet 52 and a spiral groove 53 that runs around the outside of the main body 47. Passage of air through the groove 53 allows the air to be preheated to an elevated temperature prior to its injection into the main body 47 via a manifold 54 and nozzles 55. The Figure shows three nozzles 55 directed towards a point 56. The number of nozzles 55, their arrangement and so the number of points 56 provided in a generator assembly depends on the configuration of the generator.

Fresh spray powder is metered into the top of the generator at an inlet 57. The powder passes down a channel 58 outside the body 47 due to vibration of the assembly and is heated by conduction of heat through metal parts of the spiral groove 53. The powder is drawn into the body 47 via inlets 59a, 59b due to flow patterns caused by air from the nozzles 55.

The point 56 to which the nozzles 55 are directed is termed a 'boil' point and is positioned about two thirds the way up towards the bulk powder level (indicated by a dotted line 48a). In operation, convergence of jets of air from the nozzles 55 at the 'boil' point 56 produces a fine dispersion of powder particles in air, termed a 'smoke' which moves towards an outlet as indicated by the arrows D. A plurality of baffles 61 regulates the passage of the 'smoke' out of the body 47, improving the uniformity of the density of the 'smoke' generated by preventing localised high concentrations of powder such as may arise from the 'boil' from exiting the body 50. The baffles 61 also prevent any agglomerates or large extraneous particles from exiting the body 47.

As already indicated, the design of the generator is directed towards maintaining the body 47, powder 48 and gas at an elevated temperature. To this effect, the gas and powder are preferably pre-heated prior to their introduction into the body 47. It has been found that an elevated temperature of 220^{o}C has a surprisingly beneficial effect on the smoke which can be produced. Another consideration to be taken into account is the use to which the smoke will be put.

The air pressure maintained in the manifold 54 depends on the density of smoke desired, the temperature of the generator and the number and size of the nozzles 55. It is anticipated that in the majority of applications, the air pressure used would be less than one atmosphere (in excess of ambient pressure).

The arrangement of nozzles 55 within the body 47 is affected by the number of outlets 60 required. A generator with a single outlet would typically be of a cylindrical design and have seven nozzles mounted in the base, six arranged hexagonally about a central nozzle. A generator with multiple outlets would typically be of a rectangular design with the number of nozzles determined by its length.

A variety of modifications are envisaged. Larger generator assemblies may be provided with some form of mechanical stirring. If the powder used is not very fluid, a metered dose of heavier particles (preferably of spherical shape) may be placed in the body 47 to assist in maintaining the homogenity of the bulk powder. Furthermore, one or both of the gas and powder may be preheated independently of the smoke generator prior to their introduction into the smoke generator assembly. It is envisaged that control of both the concentration of powder in the gas and the total flow rate of the suspension can be varied widely and independently of each other by varying parameters such as temperature, pressure, nozzle diameter, depth of bulk powder and rate of feed of powder into the body.

It is envisaged that the present invention may have wider applications, e.g. generating suspensions of enamel powder for dry enamelling of metals or external enamelling of glass envelopes or in the plastics coating of metal components.

## Claims

1. A method of generating a fine dispersion of particles in a gas comprising the steps of:
passing the particles into a body for containing the particles and the gas;
passing the gas through a plurality of jets;
maintaining the body containing the gas and the particles at an elevated temperature, above room temperature;
and directing the plurality of jets such that the gas emitted from them converges so as to meet at one or more points in the body containing the gas.

2. A method according to Claim 1 characterised in that said one or more points is located about two-thirds of the way up the mass of particles contained in the body.

3. A method according to Claim 1 characterised in that said elevated temperature is substantially 100°*C* .

4. A method according to Claim 1 characterized in that said elevated temperature is substantially 200°*C .*

5. A method according to Claim 1 characterized in that the particles are passed into the body so that they fill said body to a chosen height and the jets are directed to converge at one or more points at substantially two thirds of said height.

6. A method according to any one of Claims 1 to 5 characterised in that the gas supplied to the body is maintained at said elevated temperature.

7. A method according to any one of Claims 1 to 6 characterised in that the gas is air.

8. A method according to any one of Claims 1 to 7 characterised in that the body is vibrated at a low frequency.

9. A method according to any one of Claims 1 to 8 characterised in that the passage of particles out of the body is regulated.

10. An apparatus for generating a fine dispersion of particles in a gas, the apparatus comprising:
a body for containing the particles and the gas, the body having an inlet and an outlet for passage of the particles;
a plurality of jets through which the gas may be emitted;
means for directing the plurality of jets such that the gas emitted from them converges so as to meet at one or more points in the body containing the particles;
and means for maintaining the body at an elevated temperature, above room temperature.

11. An apparatus according to Claim 10 characterized by means for vibrating the body at a low frequency.

12. An apparatus according to any one of Claims 10 to 11 characterised by means for regulating passage of particles out of the body.

## Patentansprüche

1. Verfahren zur Erzeugung einer feinen Dispersion von Partikeln in einem Gas, umfassend die Schritte:
Einleiten der Partikel in eine Kammer zur Aufnahme der Partikel und des Gases;
Einleiten des Gases durch eine Vielzahl von Düsen;
Halten der das Gas und die Partikel enthaltenden Kammer auf einer erhöhten Temperatur oberhalb der Raumtemperatur;
und Ausrichten der Vielzahl von Düsen derart, daß das von ihnen ausströmende Gas konvergiert, um sich an einem oder mehreren Punkten in der das Gas enthaltenden Kammer zu treffen.

2. Verfahren nach Anspruch 1, dadurch gekennzeichnet, daß der eine oder die mehreren Punkte etwa auf zwei Drittel des Weges aufwärts der in der Kammer enthaltenen Masse von Partikeln liegen.

3. Verfahren nach Anspruch 1, dadurch gekennzeichnet, daß die erhöhte Temperatur etwa 100° C beträgt.

4. Verfahren nach Anspruch 1, dadurch gekennzeichnet, daß die erhöhte Temperatur etwa 200° C beträgt.

5. Verfahren nach Anspruch 1, dadurch gekennzeichnet, daß die Partikel in die Kammer so eingeleitet werden, daß sie die Kammer bis zu einer gewählten Höhe ausfüllen, und daß die Düsen so ausgerichtet werden, daß sie an einem oder mehreren Punkten auf etwa zwei Drittel der Höhe konvergieren.

6. Verfahren nach einem der Ansprüche 1 - 5, dadurch gekennzeichnet, daß das der Kammer zugeführte Gas auf der erhöhten Temperatur gehalten wird.

7. Verfahren nach einem der Ansprüche 1 - 6, dadurch gekennzeichnet, daß das Gas Luft ist.

8. Verfahren nach einem der Ansprüche 1 - 7, dadurch gekennzeichnet, daß die Kammer in Schwingungen mit einer niedrigen Frequenz versetzt wird.

9. Verfahren nach einem der Ansprüche 1 - 8, dadurch gekennzeichnet, daß das Herausleiten der Partikel aus der Kammer geregelt wird.

10. Vorrichtung zur Erzeugung einer feinen Dispersion von Partikeln in einem Gas, umfassend:
eine Kammer zur Aufnahme der Partikel und des Gases, wobei die Kammer einen Einlaß und einen Auslaß für die Hindurchleitung der Partikel hat;
eine Vielzahl von Düsen, durch die das Gas ausströmen kann;
Mittel zum Ausrichten der Vielzahl von Düsen derart, daß das von ihnen ausströmende Gas konvergiert, um sich an einem oder mehreren Punkten in der die Partikel enthaltenden Kammer zu treffen;
und Mittel zum Halten der Kammer auf einer erhöhten Temperatur oberhalb der Raumtemperatur.

11. Vorrichtung nach Anspruch 10, gekennzeichnet durch Mittel, um die Kammer in Schwingungen mit einer niedrigen Frequenz zu versetzen.

12. Vorrichtung nach einem der Ansprüche 10 - 11, gekennzeichnet durch Mittel zum Regeln der Herausleitung der Partikel aus der Kammer.

## Revendications

1. Méthode pour générer une fine dispersion de particules dans un gaz comprenant les étapes de:
passage des particules dans une chambre pour contenir les particules et le gaz;
passage du gaz à travers une pluralité de jets;
maintien de la chambre contenant le gaz et les particules à une température élevée au-dessus de la température ambiante;
et direction de la pluralité de jets de telle sorte que le gaz émis par ceux-ci converge afin de se rencontrer en un ou plusieurs points dans la chambre contenant le gaz.

2. Méthode selon la revendication 1 caractérisée en ce que ledit ou lesdits plusieurs points sont situés au deux tiers environ du chemin vers le haut de la masse des particules contenues dans la chambre.

3. Méthode selon la revendication 1 caractérisée en ce que ladite température élevée est en substance de 100°C.

4. Méthode selon la revendication 1 caractérisée en ce que ladite température élevée est en substance de 200°C.

5. Méthode selon la revendication 1 caractérisée en ce que les particules passent dans ladite chambre pour qu'elles remplissent ladite chambre jusqu'à une hauteur choisie et les jets sont dirigés pour converger en un ou plusieurs points en substance aux deux tiers de ladite hauteur.

6. Méthode selon l'une quelconque des revendications 1 à 5 caractérisée en ce que le gaz introduit dans la chambre est maintenu à ladite température élevée.

7. Méthode selon l'une quelconque des revendications 1 à 6 caractérisée en ce que le gaz est de l'air.

8. Méthode selon l'une quelconque des revendications 1 à 7 caractérisée en ce que ladite chambre vibre à une fréquence basse.

9. Méthode selon l'une quelconque des revendications 1 à 8 caractérisée en ce qu'on régularise ledit passage de particules hors de la chambre.

10. Appareillage pour obtenir une dispersion fine de particules dans un gaz, l'appareillage comprenant:
une chambre pour contenir les particules et le gaz, la chambre ayant une entrée et une sortie pour le passage des particules;
une pluralité de jets à travers lesquels le gaz peut être émis;
un dispositif pour diriger la pluralité de jets de telle sorte que le gaz émis par ceux-ci converge pour se rencontrer en un ou plusieurs points dans la chambre contenant les particules;
et un dispositif pour maintenir la chambre à une température élevée, au-dessus de la température ambiante.

11. Appareillage selon la revendication 10 caractérisé par un moyen pour faire vibrer la chambre à une fréquence basse.

12. Appareillage selon l'une quelconque des revendications 10 à 11 caractérisé par un dispositif pour régulariser la sortie des particules de la chambre.
